# EUROPÄISCHE PATENTSCHRIFT

(11) **EP 0 859 185 B1**
(45) Veröffentlichungstag und Bekanntmachung des Hinweises auf die Patenterteilung: **26.02.2003**
(21) Anmeldenummer: 97121815.1
(22) Anmeldetag: 11.12.1997
(51) Int. Cl.: F16L 37/248

(54) **Anordnung zum Verbinden zweier rohrförmiger Elemente**
Arrangement for the connection of two tubular elements
Dispositif pour la connexion de deux éléments tubulaires

(30) Priorität: 12.02.1997 DE 19705222
(43) Veröffentlichungstag der Anmeldung: 19.08.1998
(73) Patentinhaber: Eaton Fluid Power GmbH, 76532 Baden-Baden (DE)
(72) Erfinder: Fixemer, Andreas, 76532 Baden-Baden (DE); Mücke, Carsten, 77815 Bühl (DE)
(74) Vertreter: Gleiss, Alf-Olav, Dr.jur. Dipl.-Ing.

(56) Entgegenhaltungen:
- EP-A- 0 038 421
- WO-A-93/02313
- AT-B- 298 427
- CH-A- 405 839
- DE-A- 2 146 292
- DE-B- 1 104 273
- DE-U- 6 750 288
- DE-U- 9 417 059

## Beschreibung

Die Erfindung betrifft eine Anordnung, die zwei mittels eines Bajonett-Verschlusses miteinander verbindbare rohrförmige Elemente umfasst, gemäß Oberbegriff des Anspruchs 1.

Es ist bekannt, beispielsweise zur Herstellung eines Kühlmittelkreislaufes, einzelne Rohre an ihren Enden miteinander zu verbinden. Hierzu werden beispielsweise als Schnellkupplungen ausgebildete Bajonett-Verschlüsse verwendet. Die BajonettVerschlüsse besitzen üblicherweise zwei einander zugeordnete, ineinandergreifende Verschlußteile, die zum Erreichen einer Verriegelungsstellung gegeneinander verdrehbar und in axialer Richtung gegeneinander verlagerbar sind. Um ein Abdichten der zu verbindenden rohrförmigen Elemente zu erreichen, ist es bekannt, eine Dichtungseinrichtung vorzusehen. Bei den bekannten Bajonett-Verschlüssen besitzt hierbei eines der Verschlußteile eine konische Auflauffläche für die Dichtungseinrichtung, die üblicherweise als O-Ring ausgebildet ist, so daß diese radial eingespannt wird. Durch die Ausbildung einer konischen Auflauffläche werden sehr große Kräfte erzielt. Dies hat jedoch zum Nachteil, daß bei einer Entriegelung, insbesondere nach einer langen Einsatzzeit der Schnellkupplung, ebenfalls sehr hohe Entriegelungskräfte aufgebracht werden müssen. Darüber hinaus erfolgt eine übermäßige, einen Verschleiß hervorrufende Belastung der Dichtungseinrichtung.

Aus der DE 94 17 059 Ul geht eine gattungsgemäße Anordnung hervor, die zwei mittels eines Bajonett-Verschlusses miteinander verbindbare Förderschläuche umfasst. Der Bajonett-Verschluss besitzt einander zugeordnete, in Verriegelungsstellung ineinandergreifende Verschlußteile, die zum Erreichen der Verriegelungsstellung gegeneinander verdrehbar und in axialer Richtung gegeneinander verlagerbar sind. Zwischen zwei Dichtflächen ist eine von einem O-Ring gebildete Dichtungseinrichtung vorgesehen, mittels derer die Schlauchverbindung abgedichtet ist. Mittels des Bajonett-Verschlusses werden die Dichtflächen bei ihrer Führung in die Verriegelungsstellung axial gegeneinander bewegt und sind bei Erreichen der Verriegelungsstellung derart beabstandet zueinander angeordnet, dass die Dichtungseinrichtung in axialer Richtung eingespannt ist.

Es ist Aufgabe der Erfindung, eine Anordnung der eingangs genannten Art zu schaffen, bei der beim Verlagern der Verschlußteile des Bajonett-Verschlusses aus der Verriegelungs- in eine Entriegelungsstellung ein plötzliches Aufspringen des Bajonett-Verschlusses infolge eines in den rohrförmigen Elementen herrschenden Überdrucks vermieden werden kann und bei der vorzugsweise darüber hinaus eine hohe Dichtwirkung sichergestellt werden kann.

Zur Lösung der Aufgabe wird eine Anordnung mit den Merkmalen des Anspruchs 1 vorgeschlagen. Die Anordnung zeichnet sich dadurch aus, dass der axiale Weg der Verschlußteile zum Erreichen einer vollständigen Entriegelung größer ist als der zum Aufheben der Dichtwirkung der Dichtungseinrichtung erforder-liche axiale Weg der Dichtflächen. Aufgrund dieser Ausgestaltung ist eine gefahrlose Entriegelung der Verschlußteile beziehungsweise ein gefahrloses Lösen der rohrförmigen Enden möglich. Die Dichtwirkung der Dichtungseinrichtung wird hierdurch vorteilhafterweise aufgehoben, bevor die vollständige Entriegelung der Verschlußteile erfolgt. Es findet also ein vollständiger Druckausgleich zwischen dem in den rohrförmigen Elementen herrschenden Druck und der Umgebung der Anordnung statt, bevor die Verschlußteile des Bajonett-Verschlusses sich in ihrer Entriegelungsstellung befinden, in der sie voneinander trennbar sind. Aufgrund dieser Ausgestaltung kann ein plötzliches Aufspringen des Bajonett-Verschlusses infolge eines in den rohrförmigen Elementen herrschenden Drucks mit Sicherheit ausgeschlossen werden.

In der Verriegelungsstellung ist die Dichtungseinrichtung zwischen zwei Dichtflächen zur Gewährleistung eines druckdichten Anschlusses der rohrförmigen Elemente eingespannt, wobei die Dichtflächen mittels des Bajonett-Verschlusses bei Überführung in die Verriegelungsstellung axial gegeneinander bewegt werden und bei Erreichen der Verriegelungsstellung derart beabstandet zueinander sind, daß die Dichtungseinrichtung nur in axialer Richtung eingespannt ist. Dadurch kann erreicht werden, dass sowohl beim Verriegeln als auch beim Entriegeln der Anordnung nur relativ geringe Kräfte aufgebracht werden müssen und trotzdem eine hohe Dichtwirkung erzielt wird. Die aufzubringenden Kräfte sind vorzugsweise so klein, dass eine Verriegelung und Entriegelung ohne zusätzliche Werkzeuge, also mit den bloßen Händen erfolgen kann.

In bevorzugter Ausgestaltung der Erfindung ist vorgesehen, daß die Verschlußteile jeweils aus mehreren, vorzugsweise aus zwei Teilelementen bestehen. Hierdurch wird es vorteilhaft möglich, die Verschlußteile auch nachträglich auf eine bereits verlegte Rohrleitung aufzubringen. Die Teilelemente der Verschlußteile sind hierbei vorzugsweise verrastbar, so daß diese in einfacher Weise zu den Verschlußteilen zusammengefügt werden können.

In weiterer bevorzugter Ausgestaltung der Erfindung ist vorgesehen, daß ein erstes Verschlußteil eine Hülse umfaßt, in die ein Steckabschnitt des zweiten Verschlußteiles einrastbar ist. Hierdurch wird in einfacher Weise eine form- und kraftschlüssige Verbindung der beiden Verschiußteile miteinander erreicht.

Darüber hinaus ist in bevorzugter Ausgestaltung der Erfindung vorgesehen, daß die Dichtungseinrichtung ein ringförmiges Element ist, dessen Profil derart ausgebildet ist, daß eine axiale Stauchung erfolgt, ohne daß eine wesentliche radiale Streckung erfolgt. Hierdurch kann die Dichtungseinrichtung schon bei einer geringfügigen, axialen Belastung beziehungsweise Stauchung durch die Dichtflachen eine gute Dichtwirkung erreichen, ohne daß eine zusätzliche radiale Stauchung erforderlich ist. In bevorzugter Weise weist die Dichtungseinrichtung hierzu Formmerkmale auf, die durch die Dichtflächen axial verlagert werden können, ohne daß diese radial auslenken. Die durch die axiale Stauchung der Formmerkmale zu überwindenden Kräfte bei der Uberführung der Verschlußteile in die Verriegelungsstellung können gleichzeitig zur Entriegelung des Bajonett-Verschlusses ausgenutzt werden, so daß die von außen aufzubringenden Kräfte relativ gering sein können.

Weitere vorteilhafte Ausgestaltungen der Erfindung ergeben sich aus den übrigen Unteranspruchen.

Die Erfindung wird nachfolgend in Ausfuhrungsbeispielen anhand der Zeichnung näher erläutert. Es zeigen:
- Figur 1: eine Explosionsdarstellung der erfindungsgemäßen Anordnung;
- Figur 2: eine Schnittdarstellung der Anordnung in einer Entriegelungsstellung;
- Figur 3: eine Schnittdarstellung der Anordnung in einer Verriegelungsstellung;
- Figur 4: eine perspektivische Ansicht einer verriegelten Anordnung;
- Figuren 5 und 6: jeweils eine Draufsicht auf die verriegelte Anordnung;
- Figur 7: einen Querschnitt durch eine verriegelte Anordnung;
- Figur 8a bis 8e: Einzelschritte zum Erreichen der Verriegelungsstellung;
- Figur 9a und 9b: Einzelschritte zur Entriegelung der Anordnung;
- Figur 10: eine Schnittdarstellung durch eine Dichtungseinrichtung nach einer ersten Ausführungsvariante und
- Figur 11: eine Schnittdarstellung durch eine Dichtungseinrichtung nach einer zweiten Ausführungsvariante.

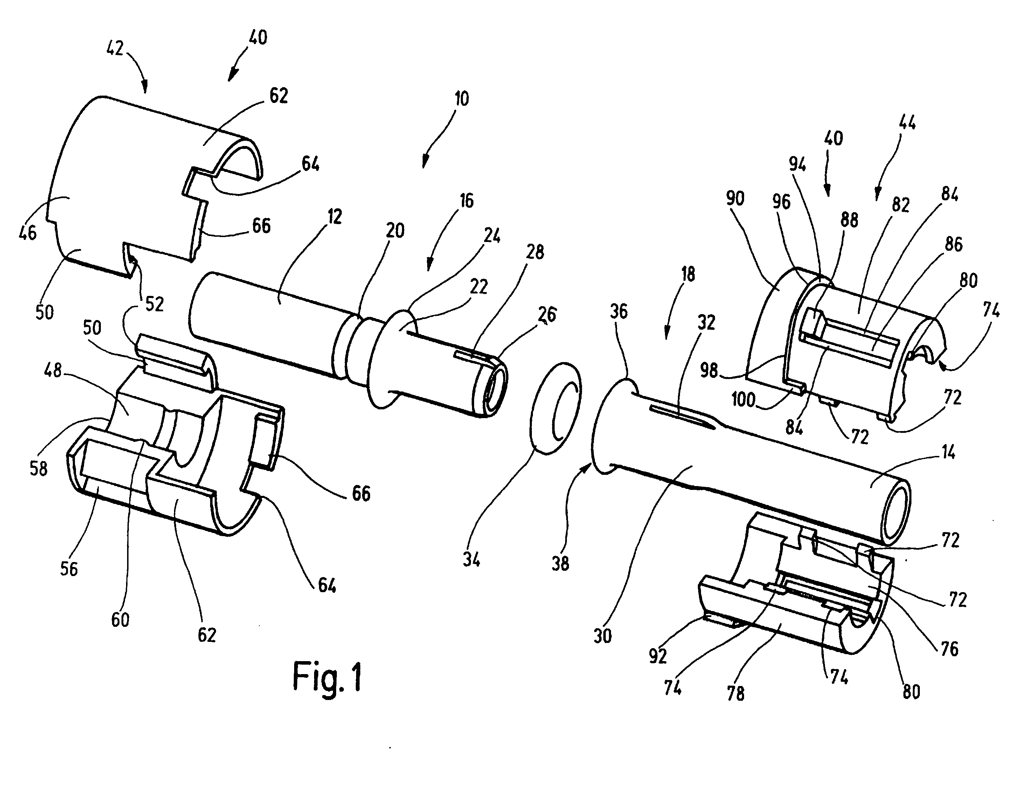

In der Figur 1 ist eine Explosionsdarstellung einer insgesamt mit 10 bezeichneten Anordnung dargestellt. Die Anordnung 10 umfaßt ein erstes Rohr 12 und ein zweites Rohr 14, wobei hier jeweils nur die Enden 16 beziehungsweise 18 der Rohre 12 und 14 dargestellt sind. Das Rohrende 16 besitzt eine sikkenartige Einschnürung 20, die in Umfangsrichtung verläuft. Beabstandet zu der Einschnürung 20 ist eine erste Dichtfläche 22 vorgesehen, die von einem tellerartigen Flansch 24 gebildet wird. Die Dichtfläche 22 bildet hierbei eine radiale Ringflache aus. Ferner besitzt das Ende 16 an seiner Stirnflache eine Abschrägung 26. In axialer Richtung ist ein nasenartiger Vorsprung 28 vorgesehen, der radial nach außen ragt und sich von der Stirnseite des Rohres 12 in Richtung des Flansches 24 erstreckt.

Das Ende 18 des zweiten Rohres 14 besitzt eine Aufweitung 30, die so ausgebildet ist, daß ein Innendurchmesser der Aufweitung 30 im wesentlichen einem Außendurchmesser des Endes 16 des Rohres 12 entspricht. Hierdurch wird sichergestellt, daß das Ende 16 des ersten Rohres 12 in der Aufweitung 30 des zweiten Rohres 14 axial verschiebbar ist. Die Aufweitung 30 besitzt einen axial verlaufenden Schlitz 32, der mit dem am Ende 16 des Rohres 12 vorgesehenen Vorsprung 28 korrespondiert. Die axiale Erstreckung des Schlitzes 32 ist größer gewählt als die axiale Erstreckung des Vorsprungs 28, so daß bei eingerastetem Vorsprung 28 in den Schlitz 32 eine Verdrehung der Rohre 12 und 14 zueinander verhindert wird, aber eine axiale Verschiebbarkeit gewährleistet ist. Nach einem weiteren Ausführungsbeispiel kann vorgesehen sein, daß anstelle des Vorsprungs 28 ein Schlitz vorgesehen ist, und anstelle des Schlitzes 32 ein radial nach innen gerichteter Vorsprung, so daß ebenfalls eine Verdrehsicherung bei gleichzeitiger Gewährleistung einer axialen Verschiebbarkeit gegeben ist.

Das Ende 18 des Rohres 14 weist an seiner Stirnseite einen tellerartigen Flansch 36 auf, der eine ringförmige Dichtfläche 38 ausbildet. Die ringförmigen Dichtflächen 22 und 38 liegen sich gegenüber und verlaufen parallel zueinander.

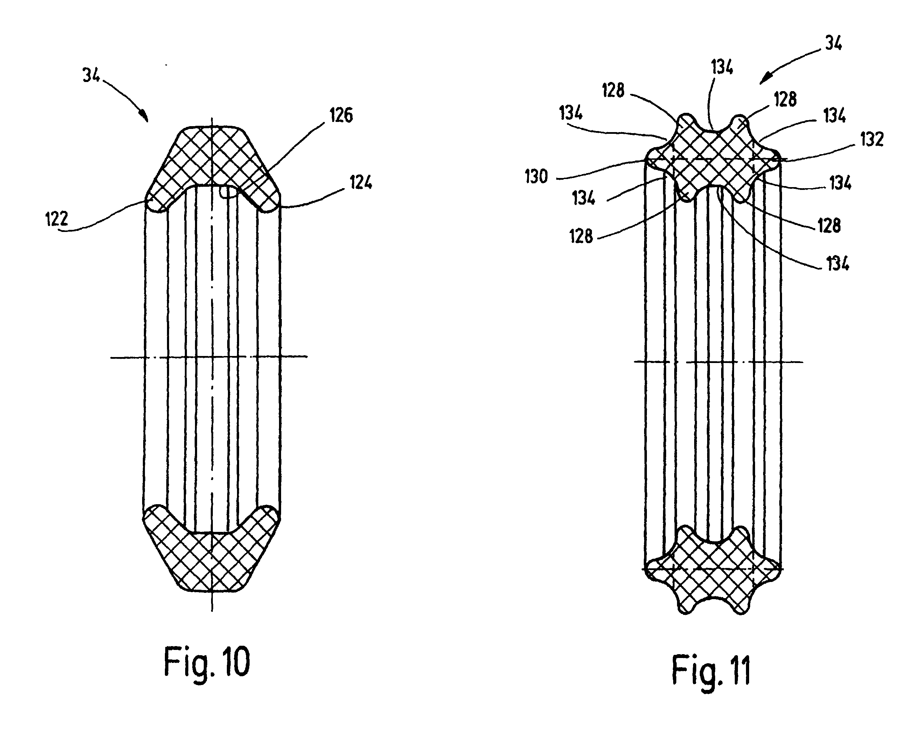

Ferner ist eine Dichtungseinrichtung 34 vorgesehen, die in Figur 1 nur schematisch angedeutet ist und deren konkreter Aufbau anhand der Figuren 10 und 11 im folgenden noch erläutert wird. Die Dichtungseinrichtung 34 ist im wesentlichen ringförmig ausgebildet und besitzt einen Innendurchmesser, der in etwa dem Außendurchmesser des Endes 16 des Rohres 12 entspricht. Hierdurch kann die Dichtungseinrichtung 34 auf das Ende 16 aufgeschoben werden. Bei nachfolgend aufgestecktem Rohr 14 liegt die Dichtungseinrichtung 34 somit zwischen den ringformigen Dichtflächen 22 und 38 der Rohre 12, 14.

Die Anordnung 10 umfaßt ferner einen Bajonett-Verschluß 40, der zwei Verschlußteile 42 und 44 umfaßt. Das Verschlußteil 42 besteht aus zwei schalenförmigen Teilelementen 46 und 48, die jeweils etwa halbkreisförmig ausgebildet sind. Jedes der Teilelemente 46 und 48 besitzt einen Vorsprung 50, von denen eine radial nach innen gerichtete Rastnase 52 entspringt. Entsprechend korrespondierend besitzt jedes der Teilelemente 46 und 48 eine axial verlaufende nutformige Vertiefung 56, deren Dimensionierung der Größe der Rastnase 52 entspricht. Durch das mehrteilige Verschlußteil 42 ist ein nachträgliches Aufbringen des Verschlußteiles auf das Rohr 12 möglich. Hierzu werden die Teilelemente 46 und 48 um das Rohr 12 herumgeführt und miteinander verrastet. Bei der weiteren Beschreibung wird davon ausgegangen, daß das Verschlußteil 42 eine aus den Teilelementen 46 und 48 bestehende Einheit bildet.

Das Verschlußteil 42 weist eine axiale Durchgangsöffnung 58 auf, deren Durchmesser dem Außendurchmesser des Rohres 12 entspricht. Hierdurch wird eine axiale Beweglichkeit des Verschlußteiles 42 auf dem Rohr 12 gewährleistet. Die Durchgangsoffnung 58 besitzt einen ringförmigen, radial nach innen gerichteten Wulst 60, der mit der Einschnürung 20 des Rohres 12 korrespondiert. Hierdurch kann das Verschlußteil 42 in eine definierte Lage zu dem Flansch 24 und damit der Dichtfläche 22 gebracht und fixiert werden.

Das Verschlußteil 42 umfaßt ferner eine Hülse 62, die sich -in Richtung der Stirnseite des Rohres 12 gesehen- über den Flansch 24 hinaus erstreckt. Die Hülse 62 besitzt gegenüberliegend zwei randoffene Einschnitte 64, an deren einer Seite benachbart jeweils ein radial nach innen gerichteter Vorsprung 66 angeordnet ist. Durch die Hülse 62 wird praktisch ein Innenraum des Bajonett-Verschlusses 40 ausgebildet.

Das Verschlußteil 44 umfaßt ebenfalls zwei, im wesentlichen halbkreisförmige Teilelemente 68 und 70. Jedes der Teilelemente 68 und 70 besitzt zwei nasenartige Rastvorsprünge 72, die in korrespondierende Rastnuten 74 einrastbar sind. Somit ist auch das Verschlußteil 44 nachträglich auf das Rohr 14 aufbringbar.

Das Verschlußteil 44 weist eine Durchgangsöffnung 76 auf, deren Durchmesser im wesentlichen dem Außendurchmesser der Aufweitung 30 des Rohres 14 entspricht. Somit ist das Verschlußteil 44 gegenüber der Aufweitung 30 und dem Flansch 36 axial beweglich.

Das Verschlußteil 44 besteht im wesentlichen aus einem Grundkörper 78, der die Durchgangsoffnung 76 aufweist. Der Grundkörper 78 besitzt gegenüberliegend zwei axial verlaufende Nuten 80, die zu einer bereichsweisen Materialschwächung des Grundkorpers 78 im Bereich der Durchgangsöffnung 76 führt. Die Mantelfläche 82 des Grundkörpers 78 besitzt im Bereich der Nuten 80 zwei axial verlaufende Schlitze 84, so daß sich ein einseitig aufgehängter Biegebalken 86 ergibt. Der Biegebalken 86 ist nur an der dem Flansch 36 abgewandten Seite des Grundkorpers 78 befestigt, das heißt, hier einstückig mit dem Grundkörper 78 verbunden. An seinem dem Flansch 36 zugewandten Ende weist der Biegebalken 86 einen radial nach außen weisenden Vorsprung 88 auf.

Von dem Grundkörper 78 entspringt in Richtung des Flansches 36 ein Steckabschnitt 90, dessen Außendurchmesser größer ist als der Außendurchmesser des Grundkörpers 78 und dessen Innendurchmesser größer ist als der Innendurchmesser der Durchgangsöffnung 76. Der Steckabschnitt 90 weist an seinem Außenumfang axial verlaufende Nuten 92 auf, deren Grund mit der Mantelfläche 82 des Grundkörpers 78 zusammenfällt. Eine Öffnungsweite der Nuten 92 entspricht einer Umfangslänge der Vorsprunge 66 des Verschlußteiles 42. An die Nut 92 schließt sich eine radial verlaufende Ringfläche 94 an, über die der Steckabschnitt 90 in den Grundkörper 78 ubergeht. Die Ringfläche 94 weist einen parallel zu den Dichtflächen 22 und 38 verlaufenden, ersten Abschnitt 96 auf, der in einen zweiten, zu den Dichtflächen 22 und 38 konisch beziehungsweise schräg verlaufenden Abschnitt 98 übergeht. Schließlich endet der zweite Abschnitt 98 an einem axial verlaufenden, einen Anschlag bildenden Vorsprung 100, der gleichzeitig die Begrenzung der zweiten Nut 92 bildet.

Der Steckabschnitt 90 besitzt insgesamt eine solche axiale Länge, daß beim Einstecken in die Hülse 62 des Verschlußteiles 42 dieser mit seiner Ringfläche 94 hinter die Vorsprünge 66 greifen kann. Der Innendurchmesser des Steckabschnittes 90 ist größer gewählt als ein Außendurchmesser der Flansche 24 und 36.

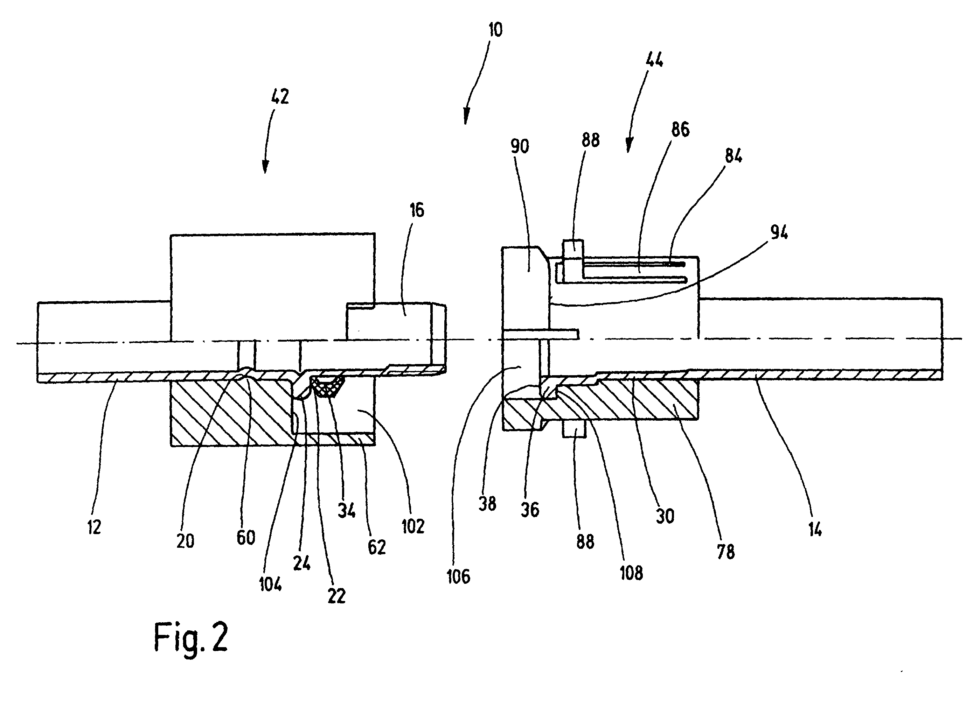

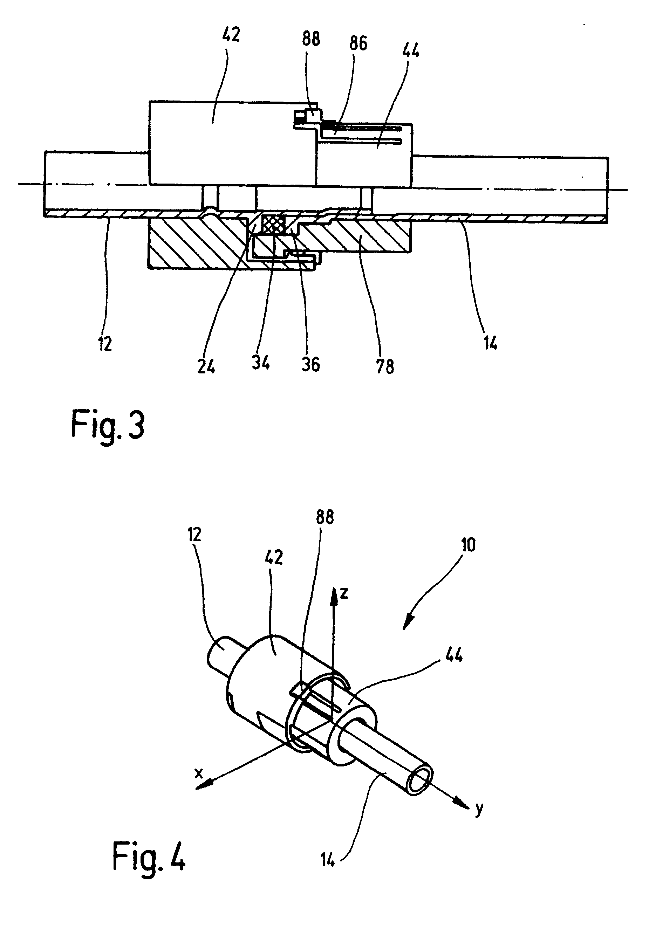

In der Figur 2 ist die Anordnung 10 in einer teilweise geschnittenen Darstellung in einer Entriege-lungsstellung gezeigt, während Figur 3 die Anordnung 10 in einer Verriegelungsstellung zeigt. Gleiche Teile wie in Figur 1 sind mit gleichen Bezugszeichen versehen, so daß zu deren Beschreibung anhand der Figur 1 verwiesen werden kann.

Aus Figur 2 wird deutlich, daß das Verschlußteil 42, aufgrund des in die Einschnürung 20 eingreifenden Wulstes 60, eine definierte Lage auf dem Rohr 12 aufweist. Diese ist so gewählt, daß die Hülse 62 den Flansch 24 und die auf das Ende 16 des Rohres 12 aufgesteckte Dichtungseinrichtung 34 umgreift, so daß diese in einem von der Hülse 62 ausgebildeten Innenraum 102 angeordnet sind. Eine radiale Ringflache 104 der Hülse 62 liegt hierbei an der der Dichtfläche 22 abgewandten Ringfläche des Flansches 24 an.

Das Verschlußteil 44 umgreift mit seinem Steckabschnitt 90 den Flansch 36. Der Steckabschnitt 90 bildet somit ebenfalls einen Innenraum 106 aus, innerhalb dem der Flansch 36 angeordnet ist. Eine zwischen dem Steckabschnitt 90 und dem Grundkörper 78 des Verschlußteiles 44 vorgesehene, radial verlaufende Ringfläche 108 liegt an einer der Dichtfläche 38 abgewandten Ringfläche des Flansches 36 an.

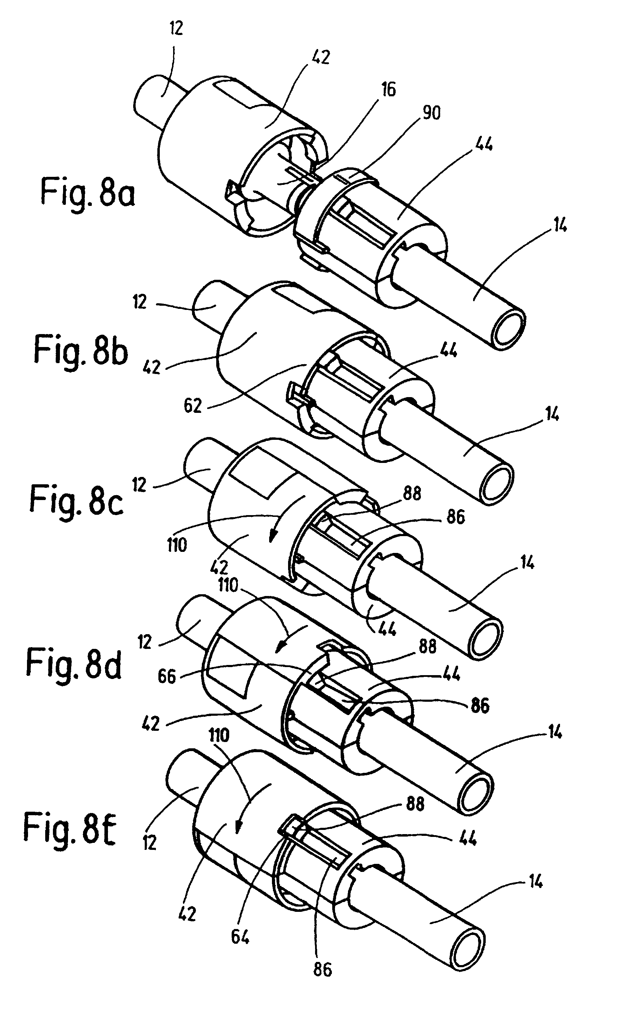

Bei der in Figur 3 gezeigten Verriegelungsstellung greift das Ende 16 des Rohres 12 in die Aufweitung 30 des Rohres 14 ein. Gleichzeitig greift der Steckabschnitt 90 des Verschlußteiles 44 in die Hülse 62 des Verschlußteiles 42 ein. Anhand der in den Figuren 8a bis 8e noch naher erlauterten Schritte erfolgt bei der Überfuhrung von der Entriegelungsstellung gemäß Figur 2 in die Verriegelungsstellung gemäß Figur 3 eine Verdrehung der Verschlußteile 42 und 44 zueinander, wobei diese sich gleichzeitig axial annähern. Die axiale Annäherung der Verschlußteile 42 und 44 wird durch den Verlauf der Ringfläche 94 definiert. Beim Einstekken des Steckabschnittes 90 in die Hülse 62 greifen die Vorsprünge 66 in die Nuten 92 ein und passieren diese axial, bis die Vorsprünge 66 mit ihrer Innenkante mit der Ringfläche 94 fluchten und parallel zu dieser verdreht werden können.

Während der Verdrehung der Verschlußteile 42 und 44 zueinander erfolgt so lange keine axiale Annäherung der Verschlußteile 42 und 44 zueinander, wie die Vorsprünge 66 entlang der parallelen Abschnitte 96 der Ringfläche 94 gefuhrt werden. Erst nachdem die Vorsprünge 66 während der Verdrehung die schräg beziehungsweise konisch verlaufenden Abschnitte 98 der Ringfläche 94 erreichen, erfolgt entsprechend der Steigung der Abschnitte 98 ein axiales Aufeinanderzubewegen der Verschlußteile 42 und 44. Die Verschlußteile 42 und 44 werden so lange zueinander verdreht, bis die Vorsprünge 66 an den Vorsprüngen 100 anschlagen und somit die Verriegelungsstellung erreicht ist.

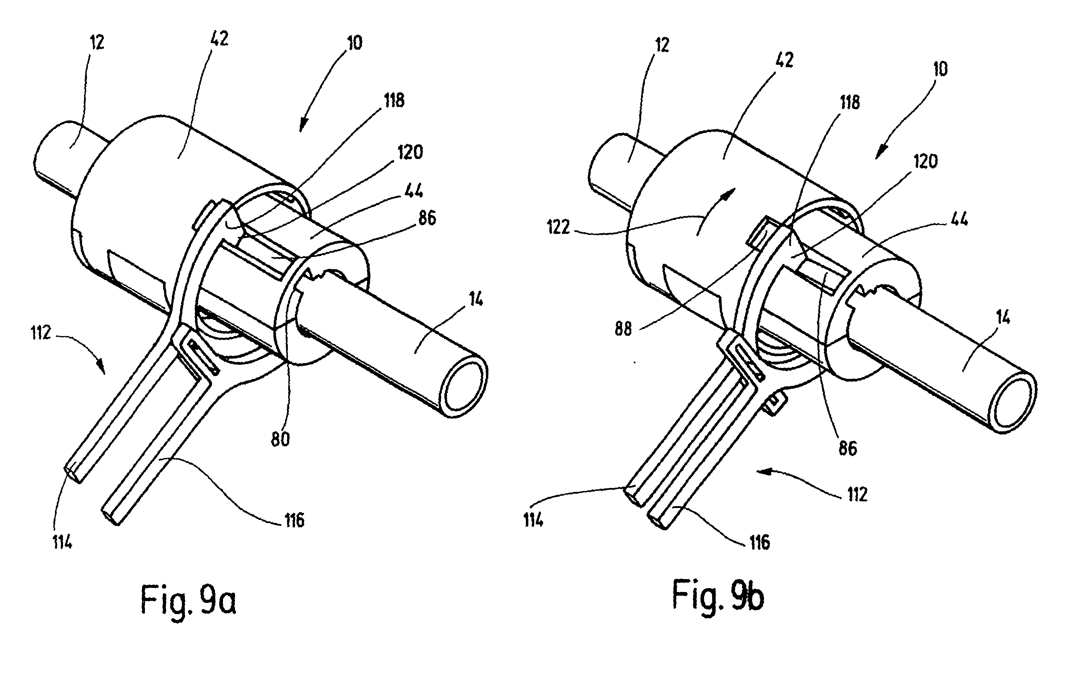

Während der Verdrehung der Verschlußteile 42 und 44 zueinander passieren die Vorsprünge 66 die Vorsprünge 88 der Biegebalken 86. Um die Vorsprünge 66 und 88 aneinander vorbeibewegen zu können, erfolgt ein Eindrücken der Biegebalken 86 in die Nuten 80. Dies kann entweder per Hand erfolgen oder die Vorsprünge 66 besitzen eine schräge Auflauffläche für die Vorsprünge 88, so daß diese bei fortschreitender Verdrehung automatisch in die Nuten 80 eingedrückt werden. Nachdem die Vorsprünge 66 die Vorsprünge 88 passiert haben, schnappen diese aufgrund der Elastizität der Biegebalken 86 in die den Vorsprüngen 66 benachbarten Einschnitte 64 der Hulse 62 ein. Hierdurch erfolgt einerseits eine Arretierung der Verschlußteile 42 und 44 zueinander, so daß ein unbeabsichtigtes Entriegeln nahezu ausgeschlossen werden kann. Eine Entriegelung kann nur dann erfolgen, wenn die Vorsprünge 88 -wie anhand der Figuren 9a und 9b noch erläutert wird- mit ihren Biegebalken 86 in die Nuten 80 hineingedrückt werden und eine entgegengesetzte Verdrehung der Verschlußteile 42 und 44 erfolgt. Andererseits bilden die Vorsprünge 88 gleichzeitig eine Anzeige fur eine ordnungsgemäß verriegelte Anordnung 10. Um diese Anzeige optisch hervorzuheben, können die Vorsprünge 88 beispielsweise eine andere Farbe aufweisen als die anderen Teile des Bajonett-Verschlusses 40.

Während die Verschlußteile 42 und 44 durch ein Verdrehen relativ zueinander sich axial aufeinander zubewegen, greift gleichzeitig eine erste, in axialer Richtung wirkende Kraft über die Ringfläche 104 an den Flansch 24 und eine dieser ersten axialen Kraft entgegengerichtete, zweite axiale Kraft über die Ringfläche 108 an den Flansch 36 an. Hierdurch werden die Flansche 24 und 36 und somit die Rohre 12 und 14 axial aufeinander zubewegt. Während der Annäherung der Flansche 24 und 36 gelangt die Dichtungseinrichtung 34 in Anlagekontakt mit den Dichtflächen 22 und 38. Die Dichtungseinrichtung 34 wird somit einer axialen Stauchung unterzogen. Der Grad der axialen Stauchung wird durch die Steigung des Abschnittes 98 der Ringfläche 94 bestimmt. Die Dichtungseinrichtung 34 wird in der Verriegelungsstellung der Anordnung 10 so weit gestaucht, daß ein druckdichtes Abschließen der Anordnung 10 gewährleistet ist, ohne daß eine radiale Stauchung der Dichtungseinrichtung 34 erfolgt. Die Dichtwirkung wird somit ausschließlich aufgrund axial angreifender Dichtkräfte erzielt. Um diese Dichtwirkung zu erreichen, weist die Dichtungseinrichtung 34 vorzugsweise einen speziellen -anhand der Figuren 10 und 11 noch näher erläuterten- Aufbau auf.

In Figur 4 ist in einer perspektivischen Darstellung nochmals die Anordnung 10 in ihrer Verriegelungsstellung gezeigt, wobei wiederum gleiche Teile wie in vorhergehenden Figuren mit gleichen Bezugszeichen versehen sind und nicht nochmals erläutert werden.

In der Figur 4 wird anhand des angedeuteten kartesischen Koordinatensystems erkennbar, daß bei eingerasteten Vorsprüngen 88 die Anordnung 10 sowohl in X-Richtung und in Y-Richtung als auch in Z-Richtung eine definierte Position einnimmt, so daß eine optimale Dichtwirkung sichergestellt ist.

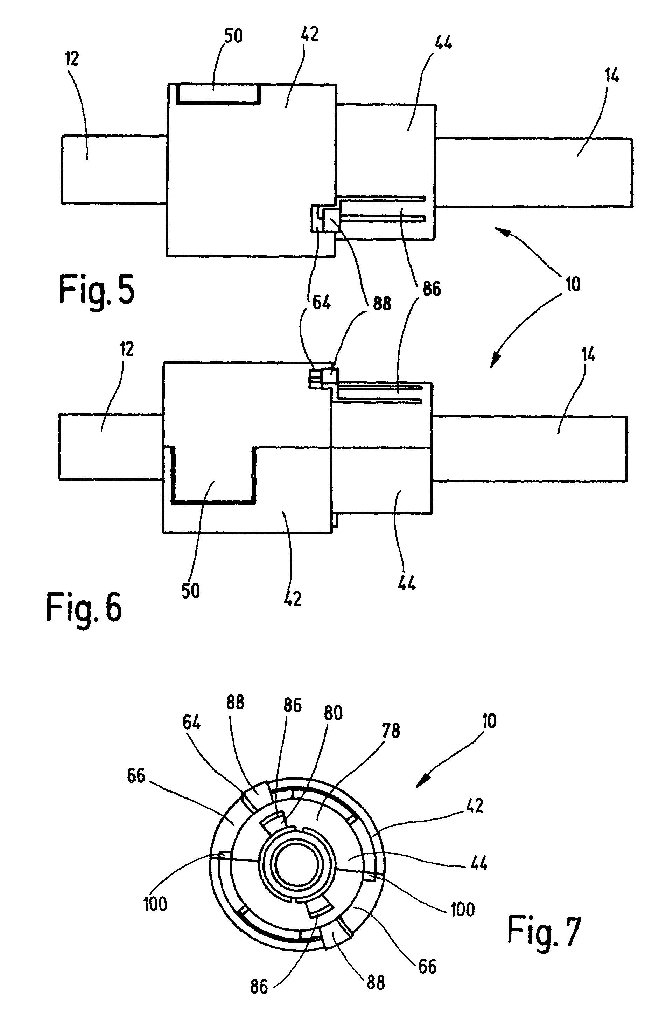

Figuren 5 und 6 zeigen die Anordnung 10 in ihrer Verriegelungsstellung in einer jeweils um 90° gedrehten Draufsicht. Es wird deutlich, wie die Verschlußteile 42 und 44 ineinandergreifen und durch die an den Biegebalken 86 angeordneten Vorsprunge 88 arretiert sind. Anhand der in den Einschnitten 64 eingerasteten Vorsprünge 88 kann sofort erkannt werden, daß sich die Anordnung 10 in ihrer ordnungsgemäßen Verrieglungsstellung befindet.

Figur 7 zeigt einen Querschnitt der Anordnung 10 im Bereich des Bajonett-Verschlusses 40. Es ist zu erkennen, wie die Verschlußteile 42 und 44 ineinander verdreht sind, so daß die Vorsprünge 66 an den Vorsprüngen 100 anliegen und die Vorsprünge 88 in die Einschnitte 64 eingerastet sind. Somit erfolgt eine Arretierung der Verschlußteile 42 und 44 zueinander, die eine Verdrehsicherung bildet. Ein Entriegeln kann nur erfolgen, indem die Vorsprünge 88 mittels der Biegebalken 86 so weit nach innen gedrückt werden, daß diese unter die Vorsprünge 66 gelangen können, bei gleichzeitiger Verdrehung der Verschlußteile 42 und 44 gegeneinander.

Die Figuren 8a bis 8e zeigen nochmals anschaulich das Überführen der Anordnung 10 von der Entriegelungsstellung in die Verriegelungsstellung. In Figur 8a ist die Entriegelungsstellung mit dem auf dem Ende 16 des Rohres 12 angeordneten Verschlußteil 42 und dem auf dem Ende 18 des Rohres 14 ange-ordneten Verschlußteiles 44 gezeigt.

Entsprechend Figur 8b wird das Verschlußteil 44 mit seinem Steckabschnitt 90 in die Hülse 62 des Verschlußteiles 42 eingeführt. Gleichzeitig gelangt das Ende 16 des Rohres 12 in die Aufweitung 30 (Figur 1) des Rohres 14. Das Einschieben des Verschlußteiles 44 in das Verschlußteil 42 erfolgt in einer definierten Position, so daß die Vorsprünge 66 in die Nuten 92 eingreifen und durch diese axial hindurchgeschoben werden. Nachdem die Vorsprünge 66 die Nuten 92 passiert haben, erfolgt gemäß Figur 8c, entsprechend der in Pfeilrichtung 110 angegebenen Richtung, ein Verdrehen der Verschlußteile 42 und 44 zueinander. Hierbei werden die Vorsprünge 66 an der Ringfläche 94 entlanggeführt, so daß -wie bereits erläutert- bei den Abschnitten 96 ausschließlich eine Verdrehung und an den Abschnitten 98 der Ringfläche 94 zusätzlich eine axiale Bewegung erfolgt. Während der Drehbewegung entsprechend der Pfeilrichtung 110 werden die Vorsprünge 88 der Biegebalken 86 auf die Vorsprünge 66 in Umfangsrichtung zubewegt. Damit die Vorsprünge 88 die Vorsprünge 66 passieren können, erfolgt eine Einwärtsbewegung der Biegebalken 86, wie sie in Figur 8d dargestellt ist. Diese Einwärtsbewegung der Biegebalken 86 kann entweder per Hand durch Aufbringen einer radial nach innen wirkenden Kraft auf die Biegebalken 86 oder durch eine entsprechende -in den Figuren nicht dargestellte- schräge Auflauffläche der Vorsprünge 66 erfolgen. Bei weiter fortschreitender Drehbewegung in Richtung der Pfeilrichtung 110 wird die in Figur 8e gezeigte Endstellung, das heißt die Verriegelungsstellung der Anordnung 10 erreicht. Hierbei wird der Vorsprung 88 an dem Vorsprung 66 in Umfangsrichtung vorbeibewegt und schnappt, infolge der Elastizität des Biegebalkens 86, in die den Vorsprüngen 66 benachbart vorgesehenen Einschnitte 64 ein. Eine entgegengesetzt der Pfeilrichtung 110 erfolgende Verdrehung der Verschlußteile 42 und 44 zueinander und somit eine Entriegelung der Anordnung 10 kann nur dann erfolgen, wenn die Vorsprünge 88 radial nach innen gedrückt und unter die Vorsprünge 66 gedrängt werden.

In den Figuren 9a und 9b ist beispielhaft gezeigt, wie eine Entriegelung der Anordnung 10 erfolgen kann. Hierzu ist ein zangenartiges Werkzeug 112 vorgesehen, das zwei zueinander bewegliche Teile 114 und 116 aufweist. Jedes der Teile 114 und 116 bildet einen Kopf 118 aus, der in einen hakenformigen Vorsprung 120 ausläuft. Die Vorsprünge 120 sind so ausgebildet, daß diese in die Nuten 80 eingreifen und die Biegebalken 86 mit den daran befestigten beziehungsweise vorgesehenen Vorsprüngen 88 radial nach innen drücken können. Entsprechend Figur 9b werden die Vorsprünge 88 radial so weit nach innen gedrückt, daß diese auf einer gedachten Umfangslinie unter die Vorsprünge 66 gelangen. Bei gleichzeitiger Drehung des Verschlußteiles 42 entsprechend der Pfeilrichtung 122 erfolgt ein Entriegeln der Anordnung 10.

Während der Entriegelung der Anordnung 10 werden die Verschlußteile 42 und 44 einerseits zueinander verdreht und andererseits bewegen sie sich axial auseinander. Hierdurch erfolgt eine Entspannung der Dichtungseinrichtung 34. Da die Dichtungseinrichtung 34 durch die Flansche 24 und 36 axial vorgespannt ist, wird durch die Entspannung der Dichtungseinrichtung 34 die Entriegelung der Anordnung 10 unterstützt, so daß dies ohne Angreifen großer äußerer Kräfte erfolgen kann.

Insbesondere ist vorgesehen, daß die axiale Entspannung der Dichtungseinrichtung 34 bereits beendet ist, während die Vorsprünge 66 noch entlang des schräg beziehungsweise konisch verlaufenden Abschnitts 98 der Ringfläche 94 in Richtung des parallelen Abschnittes 96 bewegt wird. Hierdurch wird sichergestellt, daß die Dichtwirkung aufgehoben wird, bevor eine vollständige Entriegelung der Anordnung 10 erfolgt. Somit kann ein in den Rohren 12 und 14 unter Druck stehendes Medium zwischen den Flanschen 24 und 36 entweichen, da die Dichtwirkung der Dichtungseinrichtung 34 bereits aufgehoben ist, während die Verschlußteile 42 und 44 noch miteinander in Eingriff stehen. Hiermit wird ein plötzliches Aufspringen des Bajonett-Verschlusses 40 infolge eines in den Rohren 12 und 14 herrschenden Überdruckes vermieden. Darüber hinaus kann das Medium nicht plötzlich unkontrolliert austreten und zu einer Gefährdung für Personen oder Anlagen führen.

Für die Anordnung 10 ist entscheidend, daß einerseits eine lediglich axial wirkende Dichtungseinrichtung 34 vorgesehen ist und ein axialer Weg der Verschlußteile 42 und 44 zum Erreichen ihrer Entriegelungsstellung größer ist als der zur Entlastung der Dichtungseinrichtung 34 erforderliche axiale Weg der Dichtflächen 22 und 38.

In den Figuren 10 und 11 ist die Dichtungseinrichtung 34 im einzelnen dargestellt. Es sind zwei Ausführungsbeispiele gezeigt, die gewährleisten, daß die Dichtungseinrichtung 34 im wesentlichen eine axiale Dichtwirkung entfaltet.

Die in Figur 10 gezeigte Schnittdarstellung läßt erkennen, daß die Dichtungseinrichtung 34 einen in etwa trapezförmigen Querschnitt aufweist, von dem radial unter einem Winkel nach innen gerichtete Dichtwülste 122 und 124 entspringen. Der Dichtwulst 122 ist hierbei der Dichtflache 22 und der Dichtwulst 124 der Dichtfläche 38 zugeordnet. Durch die unter einem Winkel radial nach innen springenden Dichtwülste ergibt sich zwischen den Dichtwülsten 122 und 124 ein Freiraum 126. Durch die spezielle Formgestaltung der Dichtungseinrichtung 34 wird erreicht, daß beim Beaufschlagen der Dichtwülste 122 und 124 mit einer Dichtkraft über die Dichtflachen 22 beziehungsweise 38 diese in den Freiraum 126 gedrängt werden. Aufgrund der Elastizität des Materials der Dichtungseinrichtung 34 baut sich in den Dichtwülsten 122 und 124 eine Gegenkraft auf, die ein dichtes und festes Anliegen an den Dichtflächen 22 beziehungsweise 38 sicherstellt. Eine radiale Verformung beziehungsweise Ausdehnung der Dichtungseinrichtung 34 während ihrer axialen Stauchung wird nahezu ausgeschlossen, da der Freiraum 126 durch die axiale Stauchung verdrängtes Material aufnimmt.

Bei Entriegelung der Anordnung 10 üben die Dichtwülste 122 und 124 aufgrund ihrer Elastizität eine Druckkraft auf die Dichtflächen 22 und 38 aus, so daß deren axiales Auseinanderbewegen durch die Dichtungseinrichtung 34 selbst unterstützt wird.

Gemäß dem in Figur 11 gezeigten Ausführungsbeispiel weist die Dichtungseinrichtung 34 über ihren Umfang verteilt symmetrisch angeordnete, in Umfangsrichtung verlaufende Wülste 128 und ebenfalls in Umfangsrichtung verlaufende Dichtwülste 130 und 132 auf. Die am Innenumfang und am Außenumfang vorgesehenen Wülste 128 dienen lediglich zum Abstützen der Dichtungseinrichtung 34 auf dem Ende 16 des Rohres 12 beziehungsweise dem Innenumfang des Steckabschnittes 90. Eine Dichtwirkung wird von den Dichtwülsten 130 und 132 übernommen, die in axialer Richtung einerseits mit der Dichtfläche 22 und andererseits mit der Dichtfläche 38 in Berührung kommen. Durch das axiale Aufeinanderzubewegen der Dichtflächen 22 und 38 werden die Dichtwülste 130 und 132 elastisch verformt, so daß die Dichtwirkung entsteht. Diese elastische Verformung der Dichtwulste 130 und 132 führt nicht zu einer radialen Verformung der Dichtungseinrichtung 34, da die zwischen den Wülsten 128 beziehungsweise den Dichtwülsten 130 und 132 ausgebildeten Freiräume 134 das verdrängte Material aufnehmen.

Die Verschlußteile 42, 44 können in einer für eine Massenproduktion geeigneten Weise als Kunststoffspritzteile gefertigt werden.

Nach einer weiteren Ausführungsvariante können die Verschlußteile 42, 44 als Gußteile, insbesondere

Aluminium-Druckgußteile, gefertigt werden. Hierbei kann auf die Ausbildung der Biegebalken 86 verzichtet werden, so daß eine Verriegelung ausschließlich über die Vorsprünge 66 und den Steckabschnitt 90 erfolgt.

## Patentansprüche

1. Anordnung (10), umfassend zwei rohrförmige Elemente, die mittels eines Bajonett-Verschlusses (40) miteinander verbindbar sind, wobei der Bajonett-Verschluss (40) zwei einander zugeordnete, ineinandergreifende Verschlussteile umfasst, die zum Erreichen einer Verriegelungsstellung gegeneinander verdrehbar und in axialer Richtung gegeneinander verlagerbar sind, und eine Dichtungseinrichtung (34), die in der Verriegelungsstellung zwischen zwei Dichtflächen (22,38) zur Gewährleistung eines druckdichten Abschlusses der rohrförmigen Elemente (12,14) angeordnet ist, wobei die Dichtflächen (22,38) mittels des Bajonett-Verschlusses (40) bei Überführung in die Verriegelungsstellung axial gegeneinander bewegt werden und bei Erreichen der Verriegelungsstellung derart beabstandet zueinander sind, daß die Dichtungseinrichtung (34) in axialer Richtung eingespannt ist, **dadurch gekennzeichnet, dass** der axiale Weg der Verschlussteile (42,44) zum Erreichen einer vollständigen Entriegelung größer ist als der zum Aufheben der Dichtwirkung der Dichtungseinrichtung (34) erforderliche axiale Weg der Dichtflächen (22,38).

2. Anordnung nach Anspruch 1, **dadurch gekennzeichnet, dass** der Bajonett-Verschluss (40) einen Innenraum ausbildet, in dem die Dichtungseinrichtung (34) angeordnet ist.

3. Anordnung nach einem der vorhergehenden Ansprüche, **dadurch gekennzeichnet, dass** die Verschlussteile (42,44) drehbar auf den rohrförmigen Elementen (12,14) angeordnet sind.

4. Anordnung nach einem der vorhergehenden Ansprüche, **dadurch gekennzeichnet, dass** die Verschlussteile (42,44) jeweils aus mehreren, vorzugsweise zwei, Teilelementen (46,48;68,70) bestehen.

5. Anordnung nach Anspruch 4, **dadurch gekennzeichnet,dass** die Teilelemente (46,48:68,70) miteinander verrastbar sind.

6. Anordnung nach einem der vorhergehenden Ansprüche, **dadurch gekennzeichnet, dass** ein erstes Verschlussteil (42) eine Hülse (62) umfasst, in die ein Steckabschnitt (90) des zweiten Verschlussteiles (44) einsteckbar ist.

7. Anordnung nach einem der vorhergehenden Ansprüche, **dadurch gekennzeichnet, dass** die Dichtflächen (22,38) von den rohrförmigen Elementen (12,14) gebildet werden.

8. Anordnung nach einem der vorhergehenden Ansprüche, **dadurch gekennzeichnet, dass** die rohrförmigen Elemente (12,14) Enden (16,18) aufweisen, wobei ein erstes Ende (16) in eine Aufweitung (30) des zweiten Endes (18) einführbar ist.

9. Anordnung nach einem der vorhergehenden Ansprüche, **dadurch gekennzeichnet, dass** die Enden (16,18) Flansche (24,36) ausbilden, die die Dichtflächen (22,38) aufweisen.

10. Anordnung nach einem der vorhergehenden Ansprüche, **dadurch gekennzeichnet, dass** die Flansche (24,36) an ihren den Dichtflächen (22,38) abgewandten Ringflächen formschlüssig an den Verschlussteilen (42,44) anliegen.

11. Anordnung nach einem der vorhergehenden Ansprüche, **dadurch gekennzeichnet, dass** eine die axiale Verlagerung der Verschlussteile (42,44) bestimmende Ringfläche (94) einen parallel zu den Dichtflächen (22,38) verlaufenden Abschnitt (96) und einen zu diesem schräg verlaufenden Abschnitt (98) aufweist.

12. Anordnung nach einem der vorhergehenden Ansprüche, **dadurch gekennzeichnet, dass** der Abschnitt (98) eine Steigung aufweist, die den Abstand der Dichtflächen (22,38) bei Erreichen der Verriegelungsstellung definiert.

13. Anordnung nach einem der vorhergehenden Ansprüche, **dadurch gekennzeichnet, dass** die Dichtungseinrichtung (34) ein ringförmiges Element ist, dessen Profil derart ausgebildet ist, dass eine axiale Stauchung ohne eine wesentliche radiale Streckung erfolgt.

14. Anordnung nach Anspruch 13, **dadurch gekennzeichnet, dass** die Dichtungseinrichtung (34) unter einem Winkel radial nach innen verlaufende Dichtwülste (122,124) aufweist, zwischen denen ein Freiraum (126) vorgesehen ist.

15. Anordnung nach Anspruch 13, **dadurch gekennzeichnet, dass** die Dichtungseinrichtung (34) radial verlaufende Wülste (128) und axiale verlaufende Dichtwülste (130,132) aufweist, die jeweils zwischen den Wülsten (128) beziehungsweise Dichtwülsten (130, 132) liegende Freiräume (134) ausbilden.

16. Anordnung nach einem der vorhergehenden Ansprüche 1 bis 15, **dadurch gekennzeichnet, dass** die Verschlussteile (42,44) Kunststoffteile sind.

17. Anordnung nach einem der vorhergehenden Ansprüche 1 bis 15, **dadurch gekennzeichnet, dass** die Verschlussteile (42,44) Aluminium-Druckgussteile sind.

## Claims

1. Arrangement (10) comprising two tubular elements which can be connected together by means of a bayonet closure (40), where the bayonet closure (40) has two inter-engaging closing parts allocated to each other which can be twisted against each other and moved axially towards each other to reach a locked position, and a sealing device (34) which in the locked position is arranged between two sealing surfaces (22, 38) to guarantee a pressure-tight seal of the tubular elements (12, 14), where on transfer to the locked position the sealing surfaces (22, 38) are moved axially towards each other by means of the bayonet closure (40) and on reaching the locked position are spaced apart from each other such that the sealing device (34) is clamped in the axial direction, **characterised in that** the axial travel of the closing parts (42, 44) to achieve complete unlocking is greater than the axial travel of the sealing surfaces (22, 38) required to remove the sealing effect of the sealing device (34).

2. Arrangement according to claim 1, **characterised in that** the bayonet closure (40) forms an internal chamber in which is arranged the sealing device (34).

3. Arrangement according to any of the previous claims, **characterised in that** the closing parts (42, 44) are arranged rotatably on the tubular elements (12, 14).

4. Arrangement according to any of the previous claims, **characterised in that** the closing parts (42, 44) each consist of several, preferably two part elements (46, 48; 68, 70).

5. Arrangement according to claim 4, **characterised in that** the part elements (46, 48; 68, 70) can be locked together.

6. Arrangement according to any of the previous claims, **characterised in that** a first closing part (42) comprises a sleeve (62) in which can be inserted a plug section (90) of the second closing part (44).

7. Arrangement according to any of the previous claims, **characterised in that** the sealing surfaces (22, 38) are formed by the tubular elements (12, 14).

8. Arrangement according to any of the previous claims, **characterised in that** the tubular elements (12, 14) have ends (16, 18) where a first end (16) can be introduced in an expansion (30) of the second end (18).

9. Arrangement according to any of the previous claims, **characterised in that** the ends (16, 18) form flanges (24, 36) which have sealing surfaces (22, 38).

10. Arrangement according to any of the previous claims, **characterised in that** at their ring surfaces facing away from the sealing surfaces (28, 38), the flanges (24, 36) lie by form-fit against the closing parts (42, 44).

11. Arrangement according to any of the previous claims, **characterised in that** the a ring surface (94) determining the axial displacement of the closing parts (42, 44) has a section (96) running parallel to the sealing surfaces (22, 38) and a section (98) running obliquely to this.

12. Arrangement according to any of the previous claims, **characterised in that** the section (98) has a slope which defines the spacing of the sealing surfaces (22, 38) on reaching the locked position.

13. Arrangement according to any of the previous claims, **characterised in that** the sealing device (34) is an annular element, the profile of which is formed such that an axial compression occurs without an essential radial extension.

14. Arrangement according to claim 13, **characterised in that** the sealing device (34) has sealing beads (122, 124) which run radially inwards at an angle and between which is provided a clear space (126).

15. Arrangement according to claim 13, **characterised in that** the sealing device (34) has radial beads (128) and axial sealing beads (130, 132), which form clear spaces (134) lying in each case between the beads (128) or sealing beads (130, 132).

16. Arrangement according to any of the previous claims 1 to 15, **characterised in that** the closing parts (42, 44) are plastic parts.

17. Arrangement according to any of the previous claims 1 to 15, **characterised in that** the closing parts (42, 44) are aluminium diecastings.

## Revendications

1. Dispositif (10) comprenant deux éléments tubulaires, qui peuvent être reliés entre eux à l'aide d'un emboîtement à baïonnette (40), l'emboîtement à baïonnette (40) comprenant deux éléments de verrouillage attribués l'un à l'autre et s'engrenant réciproquement, qui peuvent être tournés l'un par rapport à l'autre et déplacés l'un par rapport à l'autre en direction axiale pour atteindre une position de verrouillage, et un dispositif d'étanchéité (34) qui, dans la position de verrouillage, est placé entre deux surfaces d'étanchéité (22, 38) pour garantir une fermeture étanche à la pression des éléments tubulaires (12, 14), les surfaces d'étanchéité (22, 38) étant, lors du passage dans la position de verrouillage, déplacées dans le sens axial l'une par rapport à l'autre à l'aide de l'emboîtement à baïonnette (40) et étant espacées de telle façon entre elles lorsque la position de verrouillage est atteinte que le dispositif d'étanchéité (34) est enserré dans le sens axial, **caractérisé en ce que** le trajet axial des éléments de verrouillage (42, 44) pour atteindre un déverrouillage complet est plus grand que le trajet axial des surfaces d'étanchéité (22, 38), qui est nécessaire pour annuler l'effet d'étanchéité du dispositif d'étanchéité (34).

2. Dispositif selon la revendication 1, **caractérisé en ce que** l'emboîtement à baïonnette (40) forme un compartiment intérieur, dans lequel est disposé le dispositif d'étanchéité (34).

3. Dispositif selon l'une des revendications précédentes, **caractérisé en ce que** les éléments de verrouillage (42, 44) sont disposés sur les éléments tubulaires (12, 14) de manière à pouvoir tourner.

4. Dispositif selon l'une des revendications précédentes, **caractérisé en ce que** les éléments de verrouillage (42, 44) se composent respectivement de plusieurs, de préférence deux, éléments partiels (46, 48 ; 68, 70).

5. Dispositif selon la revendication 4, **caractérisé en ce que** les éléments partiels (46, 48 ; 68, 70) peuvent être engrenés l'un dans l'autre.

6. Dispositif selon l'une des revendications précédentes, **caractérisé en ce qu'**un premier élément de verrouillage (42) comprend une douille (62), dans laquelle peut être enfichée une section d'enfichage (90) du deuxième élément de verrouillage (44).

7. Dispositif selon l'une des revendications précédentes, **caractérisé en ce que** les surfaces d'étanchéité (22, 38) sont formées par les éléments tubulaires (12, 14).

8. Dispositif selon l'une des revendications précédentes, **caractérisé en ce que** les éléments tubulaires (12, 14) comprennent des extrémités (16, 18), une première extrémité (16) pouvant être introduite dans un évasement (30) de la deuxième extrémité (18).

9. Dispositif selon l'une des revendications précédentes, **caractérisé en ce que** les extrémités (16, 18) forment des brides (24, 36) qui comprennent les surfaces d'étanchéité (22, 38).

10. Dispositif selon l'une des revendications précédentes, **caractérisé en ce que** sur leurs surfaces annulaires opposées aux surfaces d'étanchéité (22, 38) les brides (24, 36) reposent en complémentarité de forme sur les éléments de verrouillage (42, 44).

11. Dispositif selon l'une des revendications précédentes, **caractérisé en ce qu'**une surface annulaire (94) déterminant le décalage axial des éléments de verrouillage (42, 44) comprend une section (96) s'étendant parallèlement aux surfaces d'étanchéité (22, 38) et une section (98) s'étendant en biais par rapport à celle-ci.

12. Dispositif selon l'une des revendications précédentes, **caractérisé en ce que** la section (98) comprend une pente, qui définit l'espacement des surfaces d'étanchéité (22, 38) lorsque la position de verrouillage est atteinte.

13. Dispositif selon l'une des revendications précédentes, **caractérisé en ce que** le dispositif d'étanchéité (34) est un élément de forme annulaire, dont le profil est conçu de telle façon qu'il se produise une compression axiale sans extension radiale sensible.

14. Dispositif selon la revendication 13, **caractérisé en ce que** le dispositif d'étanchéité (34) comprend des bourrelets d'étanchéité (122, 124) s'étendant en direction radiale vers l'intérieur en formant un angle et entre lesquels est prévu un espace libre (126).

15. Dispositif selon la revendication 13, **caractérisé en ce que** le dispositif d'étanchéité (34) comprend des bourrelets s'étendant dans le sens radial (128) et des bourrelets d'étanchéité (130, 132) s'étendant en direction axiale, qui forment des espaces libres (134) se trouvant respectivement entre les bourrelets (128) ou les bourrelets d'étanchéité (130, 132).

16. Dispositif selon l'une des revendications précédentes 1 à 15, **caractérisé en ce que** les éléments de verrouillage (42, 44) sont des pièces en matériau synthétique.

17. Dispositif selon l'une des revendications précédentes 1 à 15, **caractérisé en ce que** les éléments de verrouillage (42, 44) sont des pièces en aluminium moulées sous pression.
